(19) Europäisches Patentamt
European Patent Office
Office européen des brevets

(11) **EP 4 325 310 A1**

(12) **EUROPEAN PATENT APPLICATION**

(43) Date of publication:
**21.02.2024 Bulletin 2024/08**

(21) Application number: **22191223.1**

(22) Date of filing: **19.08.2022**

(51) International Patent Classification (IPC):
**G05B 19/418** (2006.01)

(52) Cooperative Patent Classification (CPC):
**G05B 19/41865**; G05B 2219/32263;
G05B 2219/32283; G05B 2219/32334;
G05B 2219/32335

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **Haag, Aaron
  69256 Mauer (DE)**
• **Lohse, Oliver
  85614 Kirchseeon (DE)**
• **Robl, Peter
  94133 Röhrnbach (DE)**

(74) Representative: **Siemens Patent Attorneys
Postfach 22 16 34
80506 München (DE)**

(54) **ENHANCING MONTE CARLO TREE SEARCH WITH MULTI-AGENT NETWORK ONLINE SCHEDULING**

(57)    Various examples of the disclosure pertain to performing an online scheduling of a production process, e.g., in an open-shop scheduling framework. Product-specific probabilities for product-specific actions that are associated with each one of the multiple products are determined using a trained deep neural network, specifically in multi-agent trained deep neural network.

**EP 4 325 310 A1**

## FIG 2

**Description**

TECHNICAL FIELD

Various examples of the disclosure generally pertain to performing an online scheduling of a production process (job shop scheduling).

BACKGROUND

Online scheduling of a production process is a complex optimization task. It relies on the choice of the next state of a multidimensional production process that includes multiple states. The states are associated with visits of multiple product to multiple machines. The production process is controlled in accordance with the determined next state.
The next state is determined based on the current state of the production process that is obtained from monitoring the production process, e.g., using state data provided by the machines or sensor data of sensors observing the production site.

SUMMARY

A need exists for advanced techniques of performing an online scheduling of a production process. Specifically, a need exists for optimized scheduling of the production process at low latency.
This need is met by the features of the independent claims. The features of the dependent claims define embodiments.
A computer-implemented method of performing online scheduling of a production process is disclosed. The production process includes multiple states. The multiple states are associated with visits of multiple products to multiple machines. The method includes monitoring the production process to determine a current state of the multiple states. The method also includes, for each one of the multiple products and based on the current state, determining respective product-specific probabilities for multiple respective product-specific actions that are associated with the respective product. The product-specific probabilities are determined using a trained deep neural network. The computer-implemented method also includes determining combined probabilities for combined actions based on the product-specific probabilities for the product-specific actions that are associated with each one of the multiple products. The combined actions transform the current state into different ones of the multiple states. The computer-implemented method also includes performing a Monte-Carlo tree search to determine a next state from amongst the multiple states based on the current state. The Monte Carlo tree search operates on a search tree that has notes that are associated with the multiple states. And expansion step of the Monte-Carlo tree search expands the search tree by preferencing amongst the combined actions in accordance with the associated combined probabilities. The method also includes controlling the production process in accordance with the next state.
Such techniques facilitate low-latency scheduling of the production process with optimized results.
A computing device includes at least one processor and a memory. The at least one processor can load and execute program code from the memory. The at least one processor, upon executing the program code can perform the computer-implemented method of performing online scheduling of the production process.
A computer program or a computer-program product or a computer-readable storage medium includes program code. The program code can be loaded and executed by at least one processor. The at least one processor, upon executing the program code can perform the computer-implemented method of performing online scheduling of the production process.
According to an embodiment, the combined probabilities can be determined using an iterative optimization. The iterative optimization may assess different combinations of the product-specific actions for the multiple products to obtain respective combined actions. The iterative optimization can consider a goal function that maximizes the combined probabilities for the respective combined actions.
By such techniques, it is possible to accurately and at low latency find certain combined actions with the associated combined probabilities that are likely to occur based on the prediction made by the deep neural network.
According to an example, the goal function may include, for at least some of the multiple machines, a single-access constraint that prevents more than a single one of the multiple products visiting the respective machine. This is an example of an additional constraint that can be imposed onto the job scheduling task that is solved. By such techniques, tailored job scheduling becomes possible. Depending on the implementation of the iterative optimization, various other and further constraints may be considered.
According to an example, the combined probabilities can be determined using a linear integer program. A linear integer program is a simplification of the iterative optimization that facilitates particular low latency calculation, because the required computational resources are reduced.

According to examples, a subset of candidate states that is explorable by the expansion step of the Monte-Carlo tree search and that is selected from the multiple states is determined based on the associated combined probabilities. This means that the prioritizing amongst the combined actions (referencing amongst the combined actions) is achieved by selecting a certain subset that serves as candidates for exploration by the Monte-Carlo tree search. Thereby, the computational resources required by the Monte-Carlo tree search are reduced, because the explorable states are reduced. At the same time, the relevant/meaningful states are considered.

According to examples, the set of candidate states includes a predetermined number of multiple states having the largest combined probabilities. For instance, it would be possible to consider those states that have the largest combined probabilities to be included in the subset of candidate states. Other criteria would be, in principle, possible, e.g., a random contribution.

The search tree can be generally configured based on an open-shop scheduling framework. This would not restrict a sequence of visits of the multiple products of the multiple machines. In other scenarios the sequence of the machines there to visit the various products can also be restricted. The open-shop scheduling framework has the advantage that it provides for a computationally expensive/challenging task so that simpler tasks can be likewise solved by the respective algorithm and even faster runtime.

It is to be understood that the features mentioned above and those yet to be explained below may be used not only in the respective combinations indicated, but also in other combinations or in isolation without departing from the scope of the invention.

BRIEF DESCRIPTION OF THE DRAWINGS

FIG. 1 schematically illustrates a system including a processing device and a production process site.

FIG. 2 schematically illustrates a processing pipeline for performing an online scheduling of a production process according to various examples.

FIG. 3 is a flowchart of a method according to various examples.

DETAILED DESCRIPTION OF EMBODIMENTS

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques of performing an online scheduling of a production process are disclosed. The production process includes multiple states being associated with visits of multiple products to multiple machines. For instance, the production process could be executed in a factory. The production process could also pertain to a logistic task.

Performing the online scheduling pertains to an optimization problem.

Advances in the field of artificial Intelligence AI are opening up new opportunities to solve optimization problems better than current methods. One example of such an optimization problem is the well-known job shop scheduling problem. See Michael Pinedo. *Scheduling: Theory, algorithms, and systems.* Springer, Cham, fifth edition edition, 2016. This optimization problem needs to be solved when scheduling production orders. When scheduling in an Advanced Planning and Scheduling tool (APS), constraints such as delivery date, material availability, shift schedules, etc., are considered. Usually, the time frame contemplated ranges from weeks to years. The calculated schedule is an optimal or near-optimal solution of the scheduling problem. During the production process, disruptions like e.g., machine breakdowns, delayed material or tool supply result in unplanned time delays, leading to the previously calculated schedule being not feasible anymore.

To cope with disruptions, a production controller starts to manually shift product orders to other machines, reprioritize them, or change the product orders' sequence. These interventions impact the complete production process further downstream, making it crucial to react accordingly in case of a disruption. However, since the production controller, according to prior-art cannot foresee his immediate actions' impact on the following production process, he cannot find an adequate reaction. Methods for online scheduling, also called reactive scheduling, range from adjusting the previously calculated schedule as little as possible to complete rescheduling. This disclosure presents an approach for online scheduling combining Monte-Carlo Tree Search (MCTS) and deep neural networks.

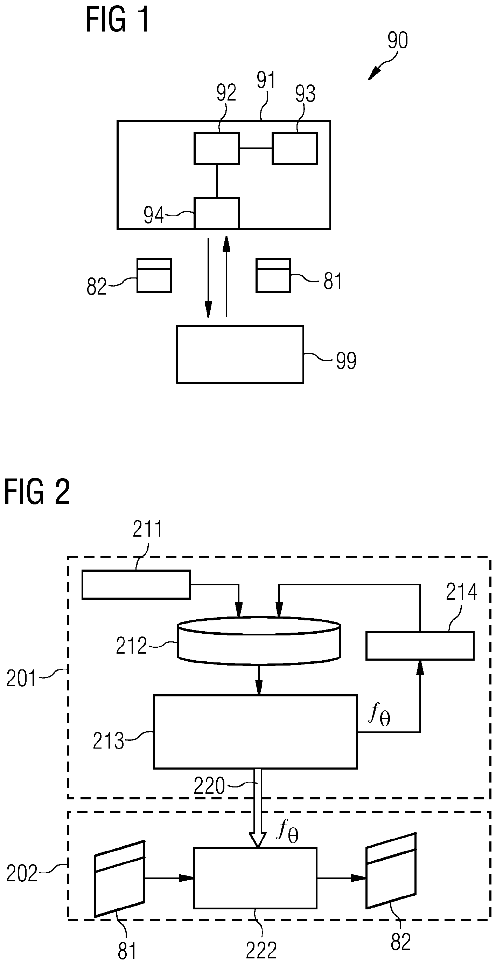

FIG. 1 schematically illustrates a system 90 according to various examples. The system 90 includes a production site 99. A production process including multiple states being associated with visits of multiple products to multiple machines is executed at the production site 99. State data 81 is provided to a processing device 91 that can obtain the state data via a communication interface 94. The state data is indicative of the current state of the production process executed at the production site 99. The state data 81 can include sensor data or control data of the machines. The processing device 91 includes a processor 92 and a memory 93. The processor 92 can load program code from the memory 93 and execute the program code. Executing the program code causes the processor 92 to perform techniques as described herein, e.g., performing an online scheduling of the production process executed at the production site 99. Specifically, it is possible that the processor 92 determines a next state of the production state and provides control data 82 to the production site 99, thereby controlling the production process in accordance with the next state.

As a general rule, various strategies for performing the online scheduling are possible. Specifically, one option is the open shop scheduling strategy. While hereinafter various techniques will be disclosed in the context of the open shop scheduling problem, other strategies are possible.

The Open Shop Scheduling Problem (OSSP) is an NP-hard optimization problem. A shop - i.e., a production site -consists of $K \geq 1$ machines. In the context of this disclosure, a job equals a product. Each product has to visit each machine once. The order in which the different products visit the machines is not fixed. Different working and travel times must also be considered. See Teofilo Gonzalez and Sartaj Sahni. Open shop scheduling to minimize finish time. J. ACM, 23(4):665-679, October 1976. Also see Michael Pinedo. Scheduling: Theory, algorithms, and systems. Springer, Cham, fifth edition edition, 2016.

The OSSP is the most complex scheduling problem. See Michael Pinedo. Scheduling: Theory, algorithms, and systems. Springer, Cham, fifth edition edition, 2016. It can be assumed that an algorithm that can solve this problem is also capable of solving scheduling problems with less complexity, e.g., the job shop scheduling problem. See Fatos Xhafa, editor. Metaheuristics for scheduling in industrial and manufacturing applications, volume Vol. 128 of Studies in computational intelligence. Springer, Berlin and Heidelberg, 2008. Therefore, the presented approach is evaluated in an OSSP- environment, but other scheduling strategies can be used.

According to the techniques disclosed herein, the online scheduling is performed by performing a MCTS. Details with respect to the MCTS are described in Sylvain Gelly and David Silver. Monte-carlo tree search and rapid action value estimation in computer go. Artificial Intelligence, 175(11):1856-1875, 2011.

The MCTS is a search tree consisting of four different steps that are repeated until a time or iteration limit is reached.

During the first step, the selection step, the most promising leaf node with unexplored children is identified. The selection is based on a selection strategy, e.g., upper confidence bounds applied to trees. See Levente Kocsis and Csaba Szepesvari. Bandit based monte-carlo planning. In David Hutchison, Takeo Kanade, Josef Kittler, Jon M. Kleinberg, Friedemann Mattern , John C. Mitchell, Moni Naor, Oscar Nierstrasz, C. Pandu Rangan, Bernhard Steffen, Madhu Sudan, Demetri Terzopoulos, Dough Tygar, Moshe Y. Vardi, Gerhard Weikum, Johannes Furnkranz, Tobias Scheffer, and Myra Spiliopoulou, editors, Machine Learning: ECML 2006, volume 4212 of Lecture Notes in Computer Science, pages 282-293. Springer Berlin Heidelberg, Berlin, Heidelberg, 2006.

In the expansion step a randomly picked unexplored child of a leaf node is added.

Next, in the simulation step, the added child is evaluated. Typically, the monte-carlo simulation is used to evaluate this child. During that step, random simulations are executed until a terminal state is reached, e.g., in a game one party won. Averaging the number of wins, losses, and draws over a couple of simulations allows for an evaluation of this child.

In the backpropagation step all nodes traversed back to the root are being updated. The MCTS loops through those four steps until a computational or time limit is reached. The node with the highest visit count is the move given back as the next action for the game. See Guillaume Chaslot, Sander Bakkes, Istvan Szita, and Pieter Spronck. Monte-carlo tree search: A new framework for game ai. In Artificial Intelligence and Interactive Digital Entertainment Conference, volume 4. 2008.

The benefit of combining the MCTS with deep neural networks is shown by Silver et al. with their AlphaGo Zero implementation. See David Silver, Aja Huang, Chris J. Maddison, Arthur Guez, Laurent Sifre, George van den Driessche, Julian Schrittwieser, Ioannis Antonoglou, Veda Panneershelvam, Marc Lanctot, Sander Dieleman, Dominik Grewe, John Nham, Nal Kalchbrenner, Ilya Sutskever, Timothy Lillicrap, Madeleine Leach, Koray Kavukcuoglu, Thore Graepel, and-Demis Hassabis. Mastering the game of go with deep neural networks and tree search. Nature, 529(7587):484-489, 2016. Following that, different publications adapted this approach to solve the job scheduling problem. Rinciog et al. solved the job shop scheduling problem in a sheet-metal production. See Alexandru Rinciog, Carina Mieth, Paul Maria Scheikl, and Anney Meyer. Sheet-metal production scheduling using alphago zero. In Conference on Production Systems and Logistics, pages 342-352. This paper shows that the scheduling result can be improved by using neural nets for the simulation instead of doing random simulations. In contrast to the approach that is disclosed hereinafter, Rinciog et al. used a single-agent, which guided the MCTS to create a schedule in a non-time critical way. The Action Combination Problem does not occur in a single-agent environment since the single-agent solves this problem by itself. Using multiple agents, this problem has to be solved additionally, as will be shown below.

According to various examples, the MCTS is combined with a deep neural network. A specific form of deep neural network is the so-called deep Q-network. Specifically, a so-called multi-agent deep Q-network (MADQN) is used. An agent, in this case a single product, interacts with an environment - the production. In a production with multiple products, each product has its own agent - in the context of this disclosure, this is defined as a multi-agent. Based on the quality of the decision of the product, a reward is given. The environment provides the agent with a state $s$, and the agent response accordingly with an action $a$. The value of such a state-action pair can be determined by the Q-function $Q(s,a)$. Using the DQN-approach, a deep neural network is used to approximate the Q-function. During the training, the neural network parameters $\theta$ are adjusted until the reward converges. See Christopher J. C. H. Watkins and Peter Dayan. Q-learning. Machine Learning, 8(3-4):279 -292, 1992.

The usage of a model-free reinforcement learning algorithm with a replay-buffer allows for targeted training of the neural net See Hester, Todd, et al. "Deep q-learning from demonstrations." Proceedings of the AAAI Conference on Artificial Intelligence. Vol. 32. No. 1. 2018. The replay buffer can be filled with observations from different sources like an APS-system or the DQN.

The combination of the exploration performance of the MCTS and the generalization ability of the MADQN results in an acceleration of the search for a good solution. This allows for usage in an online -scheduling scenario where the solution quality and the computationally times are essential.

FIG. 2 schematically illustrates the operational framework of the MCTS combined with the MADQN.

At first, at box 211, offline observations with the result of a conventional solver, e.g., am Advanced Planning and Scheduling Tool (APS) or heuristics, are generated and collected, box 212. Next, the MADQN trains the neural net parameters using samples both from offline observations as well as from its own exploration. The resulting MADQN is then used to either generate new observations supporting the MCTS. This is the iterative training depicted by box 213 and box 214. After sufficient learning, the training phase 201 is concluded and the trained MADQN is used - box 222 - to support the MCTS in the real-world setting for decision making, interference phase 202.

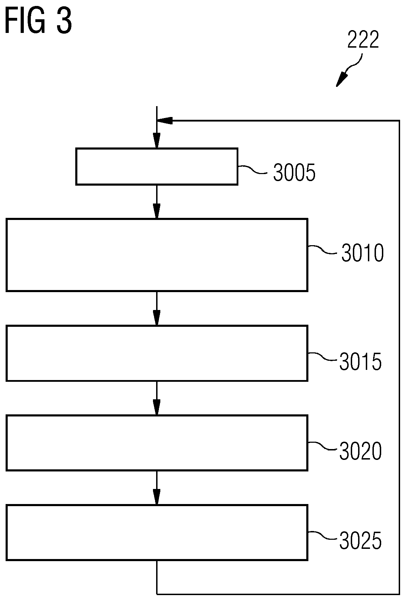

Next, details with respect to box 222 will be explained in connection with FIG. 3.

FIG. 3 is a flowchart of a method according to various examples. For instance, the method of FIG. 3 may be executed by the processor 92 upon loading and executing program code from the memory 93. The method of FIG. 3 can implement box 222.

FIG. 3 pertains to performing an online scheduling of a production process including multiple states being associated with visits of multiple products to multiple machines.

Initially, at box 3005, the production process is monitored to determine a current state of the multiple states. As explained in connection with FIG. 1, state data 81 may be obtained.

Then, at box 3010, for each one of the multiple product and based on that current state, the respective product-specific probabilities for multiple respective product-specific actions associated with the respective product are determined using a trained deep neural network, e.g., a deep neural network with multiple agents such as the MADQN.

Next, at box 3015, based on these product-specific probabilities for the product-specific actions associated with each one of the multiple products, it is then possible to determine combined probabilities for combined actions. These combined actions transform the current state into different ones of the multiple states of the production process.

At box 3020, the MCTS can be performed to determine a next state from amongst the multiple states based on the current state. The MCTS operates in a conventional manner based on a search tree having nodes associated with the multiple states. Specifically, in the expansion step of the MCTS the search tree is expanded by preferencing amongst the combined actions in accordance with the associated combined probabilities of box 3015. Once the next step has been determined, at box 3025, the production process is controlled in accordance with the next state.

The search tree may be configured based on an open shop scheduling framework that does not restrict the sequence of visits of the multiple products to the multiple machines.

An Open-Shop Scheduling Problem consists of a set of K machines

$$\mathcal{K} = \{1, \ldots, K\}$$

and N products

$$\mathcal{P} = \{1, \ldots, N\}.$$

Different travel times between the machines and different working times are considered. Products can either choose to travel to a machine or to wait. Since a single machine can only handle a single product, two kinds of machines have to be differentiated: First, Multi-Access Machines: Simultaneous arriving products are sorted according to an individual feature, e.g., an identification number or random. Second, Single-Access Machines: The arrival of more than one product is not possible by allowing only a single product to travel directly to the machine. All other products that have to be processed on this machine have to wait or must choose a different machine. Single-access machines allow for more degrees of freedom and lead to a more complex problem.

The system is described by a finite-horizon Markov-Decision-Problem with a fully observable and deterministic environment. The resulting state when taking action a in state $s$ is denoted by $s'(s,a)$. These are combined actions and states defined for all products. The state is split into different sub-parts $s_i$ (product specific state), each describing the state of the respective i-th product. The instantaneous reward $r_i$ for each product is defined by -1 as long as the product is in production (which includes processing, waiting, and travelling), and 0 otherwise. In case of an unallowed action(visiting a machine more than one time), the reward is - 10. These are only example numerical values that can vary in other examples. The makespan is denoted with T. The aim is to maximize the overall reward $R = \sum_t^T \sum_{i=1}^N r_{i,t}$ which is equivalent to the negative overall production time.

The method of FIG. 3 combines a MCTS (box 3020) with a MADQN $f_\theta$ (box 3010) with parameters θ. The MADQN is used to narrow down the search path of the MCTS and reduce the number of search iterations. Furthermore, each agent in the MADQN is assigned to a single product. An agent takes a state $s_i$ of a product as input and returns the action probabilities as vector, see Eq.1.

$$f_\theta(s_i) = [p(s_i, a_1, \theta), \ldots, p(s_i, a_{K+1}, \theta)]^T \qquad (1)$$

Since using a multi-agent, each product performs an individual product-specific action. Due to the operation principle of the MADQN: $p(s_i, a_j, \theta) > 0 \ \forall j \in \{1, ..., K+1\}$

Let $a^{(i)} \in \{a_1, ..., a_{K+1}\}$ be the chosen action of the i-th product and $a = (a^{(1)},...,a^{(N)})$ be the combined action of all products. The probabilities of the actions can be assumed to be approximately independent between the products. Therefore, the overall probability $p(s, a, \theta)$ of the combined action can be defined as shown in Eq. 2.:

$$p(s, a, \theta) \approx \prod_{i=1}^N p(s_i, a^{(i)}, \theta) \qquad (2)$$

The MCTS at box 3020 builds up a search tree, where the state s is mapped to tree nodes. A tuple $(N(s), Q(s,a))$ is mapped to each node, where $N(s)$ is the number of visits the node has been seen and $Q(s,a)$ is the estimated state-action value which is calculated in backpropagation. To support the MCTS in the selection step and the expand step the probability $p(s,a,\theta)$ is used. In the MADQN-supported expansion step the best action $a_{best}(s)$ is selected, as shown

in Eq. 3:

$$a_{best}(s) = \arg\max_{a \in \mathcal{A}(s)} Q(s,a) + \varepsilon \cdot p(s,a,\theta) \cdot \sqrt{\frac{\ln N(s)}{N(s'(s,a))}}$$

$$(3)$$

where $\mathcal{A}$ (s) denotes the set of combined actions to explore in state s. The right-hand side of the equation 3 acts as an Upper-Confidence-Bound for the taken action, as it increases the expected child value if the number of visits is low. The product of $\varepsilon$ and the MADQN probability $p(s,a,\theta)$ acts as an additional weighting factor, taking into account the estimation of the MADQN. The branching factor $|\mathcal{A}|$ can become very large, making it intractable to explore the complete tree. Therefore, $\mathcal{A}$ is restricted to a subset of promising actions, thereby preferencing amongst the combined actions. For that purpose, the probabilities $p(s,a,\theta)$ in the Expand Step will be used. It can be assumed that the actions with the highest probabilities are the most promising ones.

To find the best combined action of all products, i.e., to determine the combined probabilities, an iterative optimization can be used. The iterative optimization can assess different combinations of the product-specific actions for the multiple products to obtain the respective combined actions. A goal function can be considered that maximize the combined probabilities for the respective combined actions.

Different types of iterative optimization can be used. For instance, a genetic algorithm may be used. A Gradient descent algorithm may be used. It would also be possible that the combined probabilities are determined using a Linear Integer Program (LIP) as will be described hereinafter.

Next, the optimization problem is formulated and then a solution using a LIP is disclosed.

Let the non-zero entry in $x_i \in \{0, 1\}^{K+1}$ represent the chosen action for the i-th product, i.e. $x_{i,j} = 1 \Leftrightarrow a^{(i)} = a_j$. Then the following can be defined for a system with *multi-access machines* (Eq.4a-4b):

$$\arg\max_{x_i \in \{0,1\}^{K+1}} \prod_{i=1}^{N} x_i^T f_\theta(s_i) \qquad (4a)$$

$$\text{subject to} \quad \sum_{j=1}^{K+1} x_{i,j} = 1 \quad \forall i \in \mathcal{P} \qquad (4b)$$

The above formulated problem is convex but not linear. To solve this problem with efficient optimization techniques, it can be reformulated as Linear Integer Program. For that purpose, the objective function is reformulated using Eq. 5:

$$\arg\max_{x_i \in \{0,1\}^{K+1}} \prod_{i=1}^{N} x_i^T f_\theta(s_i) \equiv \arg\max_{x_i \in \{0,1\}^{K+1}} \sum_{i=1}^{N} \log\left(x_i^T f_\theta(s_i)\right)$$

$$(5)$$

With Eq. 4b holding, $x_i \in \{0, 1\}^{K+1}$ and $[f_\theta(s_i)]_j > 0$ the following can be assumed (Eq. 6):

$$\log\left(x_i^T f_\theta(s_i)\right) = \log \sum_{j=1}^{K+1} x_{i,j}[f_\theta(s_i)]_j$$

$$= \sum_{j=1}^{K+1} x_{i,j} \log\left[f_\theta(s_i)\right]_j \tag{6}$$

The expression exploits the fact, that only a single action can be taken by each product. Therefore, it is sufficient to separate the logarithm over the elements of $f_\theta(s_i)$. Therefore, $\hat{f}_\theta(s_i) = [\hat{p}(s_i, a_1, \theta),..., \hat{p}(s_i, a_{K+1}, \theta)]^T$ is defined where it is assumed that:

$$\hat{p}(s_i, a_j, \theta) = \log p(s_i, a_j, \theta) \tag{7}$$

The problem can then be stated as follows (Eq. 8a-8b):

$$\underset{x_i \in \{0,1\}^{K+1}}{\arg\max} \sum_{i=1}^{N} x_i^T \hat{f}_\theta(s_i) \tag{8a}$$

$$\text{subject to} \quad \sum_{j=1}^{K+1} x_{i,j} = 1 \quad \forall i \in \mathcal{P} \tag{8b}$$

which is an Integer Linear Program and can be efficiently solved.

To solve for a number of $|\mathcal{A}|$ best combined actions, an iterative approach has to be introduced. Let $\hat{x}_{i,l}$ be the result for the *l*-th best combined action. The final program for the *l*-th best combined action can then be formulated as Eq.9a-9c:

$$\hat{x}_{i,l} = \underset{x_i \in \{0,1\}^{K+1}}{\arg\max} \sum_{i=1}^{N} x_i^T \hat{f}_\theta(s_i) \tag{9a}$$

$$\text{subject to} \quad \sum_{j=1}^{K+1} x_{i,j} = 1 \quad \forall i \in \mathcal{P}, \tag{9b}$$

$$\sum_{i=1}^{N} x_i^T \hat{x}_{i,m} \leq N - 1 \quad \forall m \in \{1, \ldots, l\} \setminus \{l\}$$

$$(9c)$$

For single-access machines, a single-access constraint to prevent multiple access to a single machine is added, as shown in Eq.10:

$$\sum_{i=1}^{N} x_{i,j} = 1, \quad \forall j \in \mathcal{K} \qquad (10)$$

Summarizing, techniques have been disclosed that combine MCTS and a MADQN to solve the Open Shop Scheduling Problem. To do so, the scheduling problem is formulated as Markov-Decision-Process. Since the presented approach includes a multi-agent problem, possible actions of each agent are combined in a way the MCTS can handle the information. The action combination problem can be converted to a LIP, which can be solved efficiently. For training the MADQN a framework is developed see FIG. 2. The approach results in better learning results than a single MCTS or an MCTS with a single-agent. Good scheduling results are obtained even after a limited number of iterations - which shows the potential of this approach in an online scheduling scenario with limited reaction time. The MCTS with MADQN can solve different environment sizes. Since not all disruptions can be foreseen and thus cannot be part of the training, the presented approach needs to be able to generalize. For test purposes, the algorithm was trained in an environment with 100% machine availability and then presented with a scenario where a machine breaks down and is not available. Here too, the combination of MCTS and MADQN achieves good results.

The evaluation results show that a combination of MCTS and a multi-agent reinforcement learning algorithm can solve the open shop scheduling problem better than an MCTS or an MCTS with a single-agent reinforcement learning algorithm.

The disclosed techniques specifically allow a better online scheduling in smaller environments due to more degrees of freedom. Limits are expected where the environments grow larger, due to a harder learning task for the deep neural net.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For instance, while various scenarios have been disclosed in the context of an open shop scheduling task, other job scheduling tasks can also be subject to the disclosed techniques.

## Claims

1. A computer-implemented method of performing an online scheduling of a production process, the production process comprising multiple states being associated with visits of multiple products to multiple machines, wherein the method comprises:

   - monitoring (3005) the production process to determine a current state of the multiple states,
   - for each one of the multiple products and based on the current state: determining (3010) respective product-specific probabilities for multiple respective product-specific actions associated with the respective product using a trained deep neural network,
   - based on the product-specific probabilities for the product-specific actions associated with each one of the multiple products: determining (3015) combined probabilities for combined actions, the combined actions transforming the current state into different ones of the multiple states,
   - performing (3020) a Monte-Carlo tree search to determine a next state from amongst the multiple states based on the current state, the Monte-Carlo tree search operating on a search tree having nodes associated with the multiple states, wherein an expansion step of the Monte-Carlo tree search expands the search tree by preferencing amongst the combined actions in accordance with the associated combined probabilities, and
- controlling (3025) the production process in accordance with the next state.

2. The computer-implemented method of claim 1,
wherein the combined probabilities are determined using an iterative optimization that assesses different combinations of the product-specific actions for the multiple products to obtain respective combined actions and that considers a goal function that maximizes the combined probabilities for the respective combined actions.

3. The computer-implemented method of claim 2,
wherein the goal function comprises, for at least some of the multiple machines, a single-access constraint preventing more than a single one of the multiple products visiting the respective machine.

4. The computer-implemented method of any one of the preceding claims,
wherein the combined probabilities are determined using a linear integer program.

5. The computer-implemented method of any one of the preceding claims,
wherein a subset of candidate states that is explorable in the expansion step of the Monte-Carlo tree search and that is selected from the multiple states is determined based on the associated combined probabilities.

6. The computer-implemented method of claim 5,
wherein the subset of candidate states comprises a predetermined number of the multiple states having the largest combined probabilities.

7. The computer-implemented method of any one of the preceding claims,
wherein the search tree is configured based on an open-shop scheduling framework that does not restrict a sequence of the visits of the multiple products to the multiple machines.

8. A computing device configured for performing an online scheduling of a production process, the production process comprising multiple states being associated with visits of multiple products to multiple machines,

wherein the computing device comprises at least one processor and a memory, the at least one processor configured to load program code from the memory and to execute the program code,
wherein the at least one processor, upon executing the program code, is configured to perform the following steps:

- monitoring (3005) the production process to determine a current state of the multiple states,

- for each one of the multiple products and based on the current state: determining (3010) respective product-specific probabilities for multiple respective product-specific actions associated with the respective product using a trained deep neural network,
- based on the product-specific probabilities for the product-specific actions associated with each one of the multiple products: determining (3015) combined probabilities for combined actions, the combined actions transforming the current state into different ones of the multiple states,
- performing (3020) a Monte-Carlo tree search to determine a next state from amongst the multiple states based on the current state, the Monte-Carlo tree search operating on a search tree having nodes associated with the multiple states, wherein an expansion step of the Monte-Carlo tree search expands the search tree by preferencing amongst the combined actions in accordance with the associated combined probabilities, and
- controlling (3025) the production process in accordance with the next state.

9. The computing device of claim 8, wherein the at least one processor, upon executing the program code, is configured to perform the method of any one of claims 1 to 7.

10. A computer program for performing an online scheduling of a production process, the production process comprising multiple states being associated with visits of multiple products to multiple machines,
wherein the computer program comprises program code that is executable by at least one processor, wherein the at least one processor, upon executing the program code, is configured to perform the following steps:

- monitoring (3005) the production process to determine a current state of the multiple states,

- for each one of the multiple products and based on the current state: determining (3010) respective product-specific probabilities for multiple respective product-specific actions associated with the respective product using a trained deep neural network,
- based on the product-specific probabilities for the product-specific actions associated with each one of the multiple products: determining (3015) combined probabilities for combined actions, the combined actions transforming the current state into different ones of the multiple states,
- performing (3020) a Monte-Carlo tree search to determine a next state from amongst the multiple states based on the current state, the Monte-Carlo tree search operating on a search tree having nodes associated with the multiple states, wherein an expansion step of the Monte-Carlo tree search expands the search tree by preferencing amongst the combined actions in accordance with the associated combined probabilities, and
- controlling (3025) the production process in accordance with the next state.

11. The computer program of claim 8, wherein the at least one processor, upon executing the program code, is configured to perform the method of any one of claims 1 to 7.

FIG 1

FIG 2

FIG 3

222

3005

3010

3015

3020

3025

Europäisches
Patentamt

European
Patent Office

Office européen
des brevets

**EUROPEAN SEARCH REPORT**

Application Number

EP 22 19 1223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/312280 A1 (TAITLER AYAL [IL] ET AL) 7 October 2021 (2021-10-07)<br>* abstract; claims 1-6; figures 1,2 *<br>* paragraph [0002] – paragraph [0010] *<br>* paragraph [0021] – paragraph [0029] *<br>* paragraph [0036] – paragraph [0048] *<br>* paragraph [0056] – paragraph [0061] *<br>* paragraphs [0067], [0075], [0078], [0079] *<br>----- | 1-3,8-11 | INV.<br>G05B19/418 |
| X | WO 2020/040763 A1 (SIEMENS AG [DE]; SIEMENS CORP [US]) 27 February 2020 (2020-02-27)<br>* abstract; claims 1-20; figures 1-6 *<br>* paragraph [0017] – paragraph [0034] *<br>* paragraphs [0044], [0050] *<br>* paragraph [0063] – paragraph [0075] *<br>* paragraph [0083] *<br>----- | 1,8-11 | |
| | -/-- | | |

TECHNICAL FIELDS
SEARCHED (IPC)

G05B
G06N

The present search report has been drawn up for all claims

| Place of search | Date of completion of the search | Examiner |
|---|---|---|
| Munich | 19 January 2023 | Ohanovici, Z |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

# EUROPEAN SEARCH REPORT

Application Number

EP 22 19 1223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Bär Schirin ET AL: "Multi Agent Deep Q-Network Approach for Online Job Shop Scheduling in Flexible Manufacturing", ICMSMM 2020: International Conference on Manufacturing System and Multiple Machines, 28 May 2020 (2020-05-28), XP055809564, Retrieved from the Internet: URL:https://www.researchgate.net/profile/S chirin-Baer/publication/342751420_Multi_Ag ent_Deep_Q-Network_Approach_for_Online_Job _Shop_Scheduling_in_Flexible_Manufacturing /links/5f04c50aa6fdcc4ca4535752/Multi-Agen t-Deep-Q-Network-Approach-for-Online-Job-S hop-Scheduling-in-Flexible-Manufacturing.p df [retrieved on 2021-06-01] * abstract * * page 2540 - page 2541 * ----- | 1-11 | |
| A | HOFFMAN MICHAEL ET AL: "Online Improvement of Condition-Based Maintenance Policy via Monte Carlo Tree Search", IEEE TRANSACTIONS ON AUTOMATION SCIENCE AND ENGINEERING, IEEE SERVICE CENTER, NEW YORK, NY, US, vol. 19, no. 3, 1 July 2022 (2022-07-01), pages 2540-2551, XP011913432, ISSN: 1545-5955, DOI: 10.1109/TASE.2021.3088603 [retrieved on 2021-06-24] * abstract * * page 2540 - page 2541 * ----- -/-- | 1-11 | **TECHNICAL FIELDS SEARCHED (IPC)** |

The present search report has been drawn up for all claims

| Place of search | Date of completion of the search | Examiner |
|---|---|---|
| Munich | 19 January 2023 | Ohanovici, Z |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 3

Europäisches Patentamt

European Patent Office

Office européen des brevets

**EUROPEAN SEARCH REPORT**

Application Number

EP 22 19 1223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MAYER SEBASTIAN ET AL: "Adaptive Production Control in a Modular Assembly System – Towards an Agent-based Approach", 2019 IEEE 17TH INTERNATIONAL CONFERENCE ON INDUSTRIAL INFORMATICS (INDIN), IEEE, vol. 1, 22 July 2019 (2019-07-22), pages 45-52, XP033700811, DOI: 10.1109/INDIN41052.2019.8972152 [retrieved on 2020-01-27] * abstract; figures 1-4 * * page 45 – page 49 * ----- | 1-11 | |
| A | BAER SCHIRIN ET AL: "Multi-Agent Reinforcement Learning for Job Shop Scheduling in Flexible Manufacturing Systems", 2019 SECOND INTERNATIONAL CONFERENCE ON ARTIFICIAL INTELLIGENCE FOR INDUSTRIES (AI4I), IEEE, 25 September 2019 (2019-09-25), pages 22-25, XP033731861, DOI: 10.1109/AI4I46381.2019.00014 [retrieved on 2020-03-06] * abstract * * page 22 – page 24 * ----- | 1-11 | |

TECHNICAL FIELDS SEARCHED (IPC)

The present search report has been drawn up for all claims

| Place of search | Date of completion of the search | Examiner |
|---|---|---|
| Munich | 19 January 2023 | Ohanovici, Z |

EPO FORM 1503 03.82 (P04C01)

## ANNEX TO THE EUROPEAN SEARCH REPORT
## ON EUROPEAN PATENT APPLICATION NO.

EP 22 19 1223

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2023

| Patent document cited in search report | | Publication date | Patent family member(s) | | Publication date |
|---|---|---|---|---|---|
| US 2021312280 | A1 | 07-10-2021 | CN | 113496347 A | 12-10-2021 |
| | | | DE | 102020204351 A1 | 07-10-2021 |
| | | | US | 2021312280 A1 | 07-10-2021 |
| WO 2020040763 | A1 | 27-02-2020 | US | 2021278825 A1 | 09-09-2021 |
| | | | WO | 2020040763 A1 | 27-02-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *J. ACM,* October 1976, vol. 23 (4), 665-679
- **MICHAEL PINEDO.** Scheduling: Theory, algorithms, and systems. Springer, 2016
- Metaheuristics for scheduling in industrial and manufacturing applications. Studies in computational intelligence. Springer, 2008, vol. 128
- **SYLVAIN GELLY ; DAVID SILVER.** Monte-carlo tree search and rapid action value estimation in computer go. *Artificial Intelligence,* 2011, vol. 175 (11), 1856-1875
- Machine Learning: ECML. Lecture Notes in Computer Science. Springer, 2006, vol. 4212, 282-293

- **DAVID SILVER ; AJA HUANG ; CHRIS J ; MADDISON ; ARTHUR GUEZ ; LAURENT SIFRE ; GEORGE VAN DEN DRIESSCHE ; JULIAN SCHRITTWIESER ; IOANNIS ANTONOGLOU ; VEDA PANNEERSHELVAM.** Mastering the game of go with deep neural networks and tree search. *Nature,* 2016, vol. 529 (7587), 484-489
- **ALEXANDRU RINCIOG ; CARINA MIETH ; PAUL MARIA SCHEIKL ; ANNEY MEYER.** Sheet-metal production scheduling using alphago zero. *In Conference on Production Systems and Logistics,* 342-352
- **CHRISTOPHER J. C. H. WATKINS ; PETER DAYAN.** *Q-learning. Machine Learning,* 1992, vol. 8 (3-4), 279-292
- **HESTER ; TODD et al.** Deep q-learning from demonstrations. *Proceedings of the AAAI Conference on Artificial Intelligence.,* 2018, vol. 32 (1